# EUROPEAN PATENT SPECIFICATION

(11) **EP 4 183 487 B1**
(45) Date of publication and mention of the grant of the patent: **02.09.2026**
(21) Application number: 21842846.4
(22) Date of filing: 02.07.2021
(51) Int. Cl.: B01J 31/22, C01B 3/02, C25B 9/00, C25B 11/073

(54) **CATALYST, CATALYST FOR WATER ELECTROLYSIS CELL, WATER ELECTROLYSIS CELL, WATER ELECTROLYSIS DEVICE, AND METHOD FOR PRODUCING CATALYST**
KATALYSATOR, KATALYSATOR FÜR WASSERELEKTROLYSEZELLE, WASSERELEKTROLYSEZELLE, WASSERELEKTROLYSEVORRICHTUNG UND VERFAHREN ZUR HERSTELLUNG DES KATALYSATORS
CATALYSEUR, CATALYSEUR POUR CELLULE D'ÉLECTROLYSE DE L'EAU, CELLULE D'ÉLECTROLYSE D'EAU, DISPOSITIF D'ÉLECTROLYSE DE L'EAU ET PROCÉDÉ DE PRODUCTION DE CATALYSEUR

(30) Priority: 17.07.2020 JP 2020122915; 11.05.2021 JP 2021080405
(43) Date of publication of application: 24.05.2023
(73) Proprietor: Panasonic Intellectual Property Management Co., Ltd., Osaka-shi, Osaka 540-6207 (JP)
(72) Inventor: KOSHIKAWA, Hiroyuki, Osaka-shi Osaka 540-6207 (JP); MURASE, Hideaki, Osaka-shi Osaka 540-6207 (JP); HAYASHI, Takao, Osaka-shi Osaka 540-6207 (JP); SUZUKA, Michio, Osaka-shi Osaka 540-6207 (JP); SHIRAISHI, Seigo, Osaka-shi Osaka 540-6207 (JP)
(74) Representative: Grünecker Patent- und Rechtsanwälte PartG mbB
(86) International application number: PCT/JP2021/025151
(87) International publication number: WO 2022/014377

(56) References cited:
- WO-A1-2017/046252
- WO-A1-2019/066076
- CN-A- 109 201 103
- CN-A- 111 389 442
- JP-A- 2018 103 158
- JP-A- 2018 520 251
- US-A1- 2013 101 920
- US-A1- 2016 156 042
- MING XU ET AL: "Layered Double Hydroxide-Based Catalysts: Recent Advances in Preparation, Structure, and Applications", ADVANCED FUNCTIONAL MATERIALS, WILEY - V C H VERLAG GMBH & CO. KGAA, DE, vol. 28, no. 47, 12 September 2018 (2018-09-12), pages n/a, XP072413778, ISSN: 1616-301X, DOI: 10.1002/ADFM.201802943
- MUHAMMAD ARIF KHAN ET AL: "Recent Progresses in Electrocatalysts for Water Electrolysis", ELECTROCHEMICAL ENERGY REVIEWS, vol. 1, no. 4, 28 July 2018 (2018-07-28), pages 483 - 530, XP055724374, ISSN: 2520-8489, DOI: 10.1007/s41918-018-0014-z

## Description

### Technical Field

The present disclosure relates to a catalyst, a catalyst for water electrolysis cell, a water electrolysis cell, a water electrolysis device, and a method for producing a catalyst.

### Background Art

In recent years, the development of a catalyst material that is used in a water electrolysis device has been expected.

Non-Patent Literature 1 discloses a Ni-Fe layered double hydride (Ni-Fe LDH).

Non-Patent Literature 2 discloses a composite of FeOOH nanoparticles and a Ni-Fe LDH. Further examples of catalysts and catalyst materials are disclosed in Non-Patent Literature 3 and 4 and Patent Literature 1 to 8.

### Citation List

NPL 1: Seyeong Lee et al., "Operational durability of three-dimensional Ni-Fe layered double hydroxide electrocatalyst for water oxidation," Electrochimica Acta, 2019, Vol. 315, pp.94-101
NPL 2: Jiande Chen et al., "Interfacial Interaction between FeOOH and Ni-Fe LDH to Modulate the Local Electronic Structure for Enhanced OER Electrocatalysis," ACS Catalysis, 2018, Vol. 8, pp.11342-11351
NPL 3: Ming Xu et al.,: "Layered Double Hydroxide-Based Catalysts: Recent Advances in Preparation, Structure, and Applications", Advanced Functional Materials 2018, 28 (47).
NPL 4: Muhammad Arif Khan et al.; "Recent Progresses in Electrocatalysts for Water Electrolysis", Electrochemical Energy Reviews 2018, 1(4), 483-530.
PL 1: CN 109 201 103 A
PL 2: US 2013/101920 A1
PL 3: WO 2019/066076 A1
PL 4: US 2016/156042 A1
PL 5: CN 111 389 442 A
PL 6: JP 2018-520251 A
PL 7: JP 2018103158 A
PL 8: WO 2017/046252 A1

### Summary of Invention

The invention is set out in the appended set of claims. The dependent claims set out particular embodiments.

### Technical Problem

The present disclosure provides a catalyst having excellent durability.

### Solution to Problem

An aspect of the present disclosure provides a catalyst including a layered double hydroxide and a metal particle. The layered double hydroxide includes ions of at least two transition metals, and the metal particle includes at least one transition metal. The metal particle has a surface coated with the layered double hydroxide and includes Ni. Advantageous Effects of Invention

With the present disclosure, it is possible to provide a catalyst having excellent durability.

### Brief Description of Drawings

[Fig. 1] Fig. 1 is a schematic diagram of a catalyst according to the present embodiment.
[Fig. 2] Fig. 2 is a schematic diagram of an exemplary crystal structure of a layered double hydroxide (LDH).
[Fig. 3] Fig. 3 is a schematic diagram of an exemplary catalyst synthesis mechanism.
[Fig. 4] Fig. 4 is a schematic cross-sectional view of an exemplary water electrolysis cell, according to a second embodiment.
[Fig. 5] Fig. 5 is a schematic cross-sectional view of an exemplary water electrolysis device, according to a third embodiment.
[Fig. 6] Fig. 6 is a schematic cross-sectional view of another exemplary water electrolysis cell, according to a fourth embodiment.
[Fig. 7] Fig. 7 is a schematic cross-sectional view of another exemplary water electrolysis device, according to a fifth embodiment.
[Fig. 8] Fig. 8 is a view showing an image of a catalyst of Example 1 as observed with a transmission electron microscope (TEM).
[Fig. 9] Fig. 9 is a view showing an image of a catalyst of Example 2 as observed with the TEM.
[Fig. 10] Fig. 10 is a view showing an image of a catalyst of Example 3 as observed with the TEM.
[Fig. 11] Fig. 11 is a view showing an image of a catalyst of Comparative Example 1 as observed with the TEM.
[Fig. 12] Fig. 12 is a view showing an image of a catalyst of Comparative Example 2 as observed with the TEM.

### Description of Embodiments

### (Underlying Knowledge Forming Basis of the Present Disclosure)

A step for combating global warming that is attracting attention is the utilization of renewable energy, such as solar power or wind power. However, power generation that uses renewable energy presents a problem in that the excess electrical power goes to waste. That is, the renewable energy is not necessarily utilized with sufficient efficiency. Correspondingly, studies are being conducted regarding methods for producing hydrogen from excess electrical power and storing the hydrogen.

A typical method for producing hydrogen from excess electrical power may be the electrolysis of water. The electrolysis of water is also referred to as water electrolysis. It is desired that a highly efficient and long-lasting water electrolysis device be developed so that hydrogen can be produced inexpensively and consistently.

In a water electrolysis device, oxygen is generated at the anode. This reaction is sometimes referred to as an anode reaction. To provide a highly efficient water electrolysis device, a problem to be addressed is the increase in overvoltage, particularly at the anode. Correspondingly, highly active catalyst materials for the anode reaction in water electrolysis are being developed.

Providing a highly efficient and long-lasting water electrolysis device requires, in particular, improvements in the performance and durability of the catalyst. Layered double hydroxides (LDHs) are attracting attention as a promising catalyst material for the anode reaction in water electrolysis, because of some characteristics of LDHs. Examples of the characteristics are that LDHs can have a high specific surface area and that the combinations of metal ions that can be included in LDHs are diverse.

An LDH including transition metal ions as constituent elements can be synthesized, for example, by adjusting an aqueous solution containing ions of at least two transition metals, in a manner such that the aqueous solution becomes an alkaline aqueous solution. Additionally, the LDH can serve as a catalyst for the anode reaction in water electrolysis.

However, since LDHs have low conductivity, using an LDH as a catalyst requires using the LDH in a state in which the LDH is supported on a support having conductivity. To date, evaluations for catalytic performance have been performed on LDH composites that use, as a support, a carbon material such as Ketjen black. However, regarding such LDH composites, there is room for reconsideration from the standpoint of oxidation resistance associated with the anode reaction in water electrolysis. The present inventors diligently performed studies to find that the aforementioned problem can be solved by using metal particles and an LDH and, accordingly, completed the present disclosure.

### (Overview of Aspects of Present Disclosure)

According to a first aspect of the present disclosure, a catalyst includes
a layered double hydroxide including ions of at least two transition metals; and
a metal particle including at least one transition metal, in which
the metal particle has a surface coated with the layered double hydroxide, and wherein the metal particle includes Ni.

With regard to the first aspect, it is possible to provide a catalyst having excellent durability.

Herein, the expression "have a surface coated" refers to a state in which the entirety of a surface of the metal particles is coated with the layered double hydroxide, as confirmed by examination of the catalyst with a TEM. The expression "the entirety of a surface is coated" encompasses not only instances in which the entirety of a surface of the metal particles is completely coated with the layered double hydroxide but also instances in which the entirety of a surface of the metal particles, excluding a portion or portions of the surface of the metal particles not coated with the layered double hydroxide, is coated with the layered double hydroxide. The expression "have a surface coated" encompasses instances in which, for example, 90% or more of a surface of the metal particles is coated with the layered double hydroxide, as determined by examination of the catalyst with a TEM. Additionally or alternatively, the expression "have a surface coated" encompasses instances in which, for example, a ratio of a mass of the metal particles in the catalyst to a mass of the layered double hydroxide in the catalyst is less than or equal to 8.0.

In instances where two or more types of metal particles are included in the catalyst, it is sufficient that at least one of the types of metal particles have a surface coated with the layered double hydroxide.

In a second aspect of the present disclosure, for example, in the catalyst according to the first aspect, a ratio R2/R1, which is a ratio of R2 to R1, may be greater than or equal to 0.87 and less than or equal to 1.20, where R1 is defined as a ratio of a mass of the metal particle to a mass of the layered double hydroxide, the mass of the metal particle being a mass of the metal particle used in preparation of the catalyst, the mass of the layered double hydroxide being a mass of the layered double hydroxide in an instance in which all ions of transition metals used in the preparation of the catalyst contribute to formation of the layered double hydroxide, the transition metals being identical to the at least two transition metals, and R2 is defined as a ratio of a mass of the metal particle in the catalyst to a mass of the layered double hydroxide in the catalyst. With this configuration, it is likely that the surface of the metal particles is coated with the layered double hydroxide.

In a third aspect of the present disclosure, for example, the catalyst according to the first or second aspect may further include a coating layer that is provided on the surface of the metal particle and that includes the layered double hydroxide. The coating layer may have an average thickness of less than or equal to 100 nm. With this configuration, it is possible to provide a catalyst that is more certain to have excellent durability.

In a fourth aspect of the present disclosure, for example, in the catalyst according to any one of the first to third aspects, the layered double hydroxide may have a crystallite size of less than or equal to 10 nm. With this configuration, the catalyst is more certain to have high catalytic activity.

In a fifth aspect of the present disclosure, for example, in the catalyst according to any one of the first to fourth aspects, the layered double hydroxide may include a multidentate ligand.

In a sixth aspect of the present disclosure, for example, in the catalyst according to the fifth aspect, the multidentate ligand may include at least one selected from the group consisting of acetylacetone and a citric acid salt.

With regard to the fifth and sixth aspects, the LDH has more sufficiently improved dispersion stability.

In a seventh aspect of the present disclosure, for example, in the catalyst according to any one of the first to sixth aspects, the ions of the at least two transition metals may include ions of at least two transition metals selected from the group consisting of V, Cr, Mn, Fe, Co, Ni, Cu, W, and Ru.

In an eighth aspect of the present disclosure, for example, in the catalyst according to any one of the first to seventh aspects, the ions of the at least two transition metals may include an ion of at least one transition metal selected from the group consisting of Ni and Fe.

With regard to the seventh and eighth aspects, the catalyst is more certain to have high catalytic activity.

According to the present invention, the metal particle includes Ni. With this configuration, the catalyst can have high durability against alkalis.

In a ninth aspect of the present disclosure, for example, in the catalyst according to any one of the first to eighth aspects, the metal particle may have an average particle diameter of less than or equal to 50 nm. With this configuration, it is possible to provide a catalyst that is more certain to have excellent durability in the anode reaction in water electrolysis, for example.

According to a tenth aspect of the present disclosure, a catalyst for a water electrolysis cell includes the catalyst according to any one of the first to ninth aspects.

With regard to the tenth aspect, the catalyst for a water electrolysis cell is more certain to have excellent durability in the anode reaction in water electrolysis, for example.

According to an eleventh aspect of the present disclosure, a water electrolysis cell includes
a positive electrode including the catalyst for a water electrolysis cell according to the tenth aspect;
a negative electrode; and
an electrolyte.

In instances where two or more types of metal particles are included in the catalyst for a water electrolysis cell included in the positive electrode, it is sufficient that at least one of the types of metal particles have a surface coated with the layered double hydroxide.

With regard to the eleventh aspect, the water electrolysis cell is more certain to have excellent durability in the anode reaction in water electrolysis, for example.

According to a twelfth aspect of the present disclosure, a water electrolysis cell includes
a positive electrode;
a negative electrode including the catalyst for a water electrolysis cell according to the tenth aspect; and
an electrolyte.

In instances where two or more types of metal particles are included in the catalyst for a water electrolysis cell included in the negative electrode, it is sufficient that at least one of the types of metal particles have a surface coated with the layered double hydroxide.

With regard to the twelfth aspect, the water electrolysis cell is more certain to have excellent durability.

According to a thirteenth aspect of the present disclosure, a water electrolysis device includes
the water electrolysis cell according to the eleventh or twelfth aspect; and
a voltage applicator that applies a voltage between the positive electrode and the negative electrode, the voltage applicator being connected to the positive electrode and the negative electrode.

With regard to the thirteenth aspect, the water electrolysis device is more certain to have excellent durability.

According to a fourteenth aspect of the present disclosure, a method for producing a catalyst according to the first aspect includes
adding a multidentate ligand to prepare an aqueous solution that includes a metal particle, the multidentate ligand, and ions of at least two transition metals, the metal particle including a transition metal that is the same as at least one of the ions of the at least two transition metals; and
converting the aqueous solution into an alkaline aqueous solution at ambient temperature.

Catalysts obtained in accordance with the fourteenth aspect have excellent durability.

In a fifteenth aspect of the present disclosure, for example, in the method for producing a catalyst according to the fourteenth aspect, the catalyst may include a layered double hydroxide and the metal particle, and a ratio R2/R1, which is a ratio of R2 to R1, may be greater than or equal to 0.87 and less than or equal to 1.20, where R1 is defined as a ratio of a mass of the metal particle to a mass of the layered double hydroxide, the mass of the metal particle being a mass of the metal particle added to the aqueous solution, the mass of the layered double hydroxide being a mass of the layered double hydroxide in an instance in which all of the ions of the at least two transition metals in the aqueous solution contribute to formation of the layered double hydroxide, and R2 is defined as a ratio of a mass of the metal particle in the catalyst to a mass of the layered double hydroxide in the catalyst. With this configuration, it is likely that a surface of the metal particles is coated with the layered double hydroxide.

In a sixteenth aspect of the present disclosure, for example, the method for producing a catalyst according to the fourteenth or fifteenth aspect may further include increasing a pH of the alkaline aqueous solution. Catalysts obtained in accordance with the sixteenth aspect are more certain to have excellent durability.

In a seventeenth aspect of the present disclosure, for example, in the method for producing a catalyst according to any one of the fourteenth to sixteenth aspects, the ions of the at least two transition metals may include ions of at least two transition metals selected from the group consisting of V, Cr, Mn, Fe, Co, Ni, Cu, W, and Ru.

In an eighteenth aspect of the present disclosure, for example, in the method for producing a catalyst according to any one of the fourteenth to seventeenth aspects, the ions of the at least two transition metals may include an ion of at least one transition metal selected from the group consisting of Ni and Fe.

With regard to the seventeenth and eighteenth a aspects, the catalyst is more certain to have high catalytic activity.

In the method for producing a catalyst according to the present invention, the metal particle includes Ni. With this configuration, the catalyst can have high durability against alkalis.

In a nineteenth aspect of the present disclosure, for example, in the method for producing a catalyst according to any one of the fourteenth to eighteenth aspects, the ions of the at least two transition metals and the multidentate ligand may form complexes having a solubility in water at 20°C to 25°C of greater than or equal to 2 g/liter. In this case, the complexes are readily soluble in water.

In a twentieth aspect of the present disclosure, for example, in the method for producing a catalyst according to any one of the fourteenth to nineteenth aspects, the multidentate ligand may include at least one selected from the group consisting of acetylacetone and a citric acid salt. With this configuration, the complexes are more certain to have improved dispersion stability.

In a twenty-first aspect of the present disclosure, for example, in the method for producing a catalyst according to any one of the fourteenth to twentieth aspects, a ratio of a concentration of the multidentate ligand in the aqueous solution to a total concentration of the ions of the at least two transition metals in the aqueous solution may be less than or equal to 0.4. In this case, the catalyst is more certain to have excellent durability in the anode reaction in water electrolysis, for example.

Embodiments of the present disclosure will now be described in detail with reference to the drawings. Note that each of the embodiments described below is a generic or specific example. Accordingly, in the following embodiments, the mentioned numerical values, shapes, materials, constituent elements, arrangements of the constituent elements, forms of connections thereof, and the like are merely illustrative and are not intended to limit the present disclosure. Furthermore, among the constituent elements in the following embodiments, constituent elements not described in the independent claims, which represent the most generic concept, will be described as optional constituent elements. Furthermore, for components assigned the same reference character in the drawings, redundant descriptions may be omitted. Furthermore, in the drawings, the constituent elements are illustrated schematically for ease of understanding, and shapes, dimensional ratios, and the like thereof may not be accurately represented.

Furthermore, in the production methods, the order of the steps may be changed, and one or more steps known in the art may be added, as necessary.

### (First Embodiment)

A catalyst according to the present embodiment includes a layered double hydroxide (LDH) and metal particles. A surface of the metal particles is coated with the LDH. The LDH may coat 70% or more of the surface of the metal particles. The LDH may coat most of the surface of the metal particles, specifically, 90% or more of the surface. The catalyst may have a cross section having a surface coated with the LDH. Furthermore, a ratio of a mass of the metal particles in the catalyst to a mass of the LDH in the catalyst may be less than or equal to 8.0. The LDH includes ions of at least two transition metals. The metal particles include at least Ni and optionally a further transition metal. With this configuration, it is possible to provide a catalyst having excellent durability.

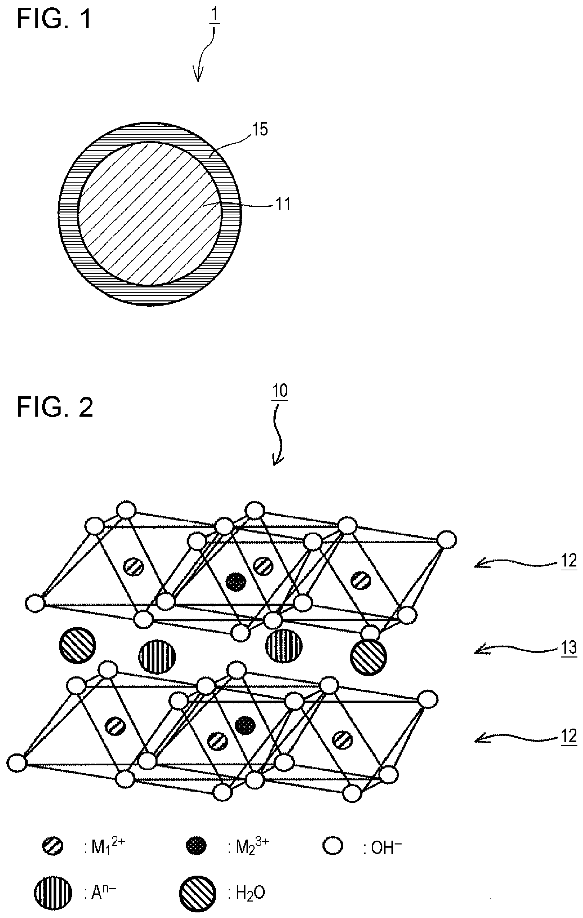

Fig. 1 is a schematic diagram of a catalyst according to the present embodiment. As illustrated in Fig. 1, a catalyst 1 includes a metal particle 11 and a coating layer 15, for example. The coating layer 15 is provided, for example, on a surface of the metal particle 11. The coating layer 15 includes, for example, an LDH 10, which will be described below.

### [LDH]

Fig. 2 is a schematic diagram of an exemplary crystal structure of the LDH. The LDH 10 is a material having activity for the reaction that generates gases, such as hydrogen and oxygen, at a positive electrode or a negative electrode of a water electrolysis cell.

As described above, the LDH 10 includes ions of at least two transition metals. The ions of the at least two transition metals include ions of at least two transition metals selected from the group consisting of, for example, V, Cr, Mn, Fe, Co, Ni, Cu, W, and Ru. With this configuration, the catalyst 1 is more certain to have high catalytic activity.

The LDH 10 has a composition represented, for example, by composition formula (1) below.

[M₁²⁺₁₋ₓM₂³⁺ₓ(OH)₂][yAⁿ⁻·mH₂O] ... Composition formula (1)

In composition formula (1), M₁²⁺ is an ion of a divalent transition metal. M₂³⁺ is an ion of a trivalent transition metal. Aⁿ⁻ is an anion present between layers. x is a rational number satisfying the condition of 0 < x <1. y is a number corresponding to an amount necessary for a charge balance. n is an integer. m is an appropriate rational number.

The transition metal ions included in the LDH 10 may be ions of at least one transition metal selected from the group consisting of Ni and Fe. With this configuration, the catalyst 1 is more certain to have high catalytic activity.

The LDH 10 may include Ni and Fe. In composition formula (1), M₁ may be Ni, and M₂ may be Fe. That is, the transition metals included in the LDH 10 may be Ni and Fe. With this configuration, the catalyst 1 is more certain to have high catalytic activity.

In instances where the LDH 10 includes Ni and Fe, a ratio of an amount of substance of the Fe to a total amount of substance of the Ni and Fe present in the LDH 10 may be greater than or equal to 0.25 and less than or equal to 0.5. With this configuration, the catalyst 1 is more certain to have high catalytic activity.

The LDH 10 may include a multidentate ligand. In this instance, the multidentate ligand may coordinate with the transition metal ions in the LDH 10. In this case, the LDH 10 has more sufficiently improved dispersion stability. The presence of the multidentate ligand in the LDH 10 may enable the synthesized LDH 10 to have a small particle diameter. As a result, the LDH 10 can have an improved specific surface area, which in turn can improve catalytic activity. The LDH 10 may have an average particle diameter of less than or equal to 100 nm or less than or equal to 50 nm. Furthermore, the average particle diameter of the LDH 10 may be less than or equal to 10 nm. The lower limit of the average particle diameter of the LDH 10 is not limited to any particular value. The lower limit may be 1.5 nm or 2 nm. The LDH 10 includes primary particles and secondary particles. The primary particles include one or more microscopic single crystal regions. The secondary particles are aggregates of such primary particles. The average particle diameter of the LDH 10 is a value determined as follows. A particle size distribution thereof is obtained by using small angle X-ray scattering (SAXS), a relationship between the particle diameter and the distribution is represented in a two-dimensional distribution graph, and the area in the two-dimensional distribution graph is divided by the total number of the particles. The distribution indicates numerical values proportional to the total volume of the particle number of a corresponding particle diameter. The area in the two-dimensional distribution graph is, for example, the product of a particle diameter and the number of particles corresponding to the particle diameter.

A crystallite size of the LDH 10 in a stacking direction may be less than or equal to 10 nm or less than or equal to 5 nm. The lower limit of the crystallite size of the LDH 10 in the stacking direction is not limited to any particular value. The lower limit may be 1.5 nm or 2 nm. The "stacking direction" refers to, for example, a direction extending in a thickness direction of the coating layer 15 from a surface of the metal particles 11. The crystallite size of the LDH 10 in the stacking direction can be determined, for example, by using an X-ray diffractometer (XRD), in accordance with a method described in the "Examples" section.

For example, the LDH 10 has a hexagonal crystallite in a planar direction. A crystallite size of the LDH 10 in the planar direction may be less than or equal to 10 nm or less than or equal to 5 nm. The lower limit of the crystallite size of the LDH 10 in the planar direction is not limited to any particular value. The lower limit may be 1.5 nm or 2 nm. The "planar direction" refers to, for example, a direction perpendicular to the stacking direction. The crystallite size of the LDH 10 in the stacking direction may be equal to or different from the crystallite size of the LDH 10 in the planar direction. A difference between the crystallite size of the LDH 10 in the stacking direction and the crystallite size of the LDH 10 in the planar direction is, for example, less than or equal to 5 nm. The crystallite size of the LDH 10 in the planar direction can be determined, for example, by using an X-ray diffractometer (XRD), in accordance with the method described in the "Examples" section. In the present disclosure, the "crystallite size" refers to crystallite sizes of the LDH in the stacking direction and the planar direction determined from the results of XRD according to the Scherrer equation.

The multidentate ligand is not limited to any particular multidentate ligand. For example, the multidentate ligand is an organic compound that coordinates with the transition metal ions in the LDH 10. The multidentate ligand may be at least one selected from the group consisting of bidentate organic ligands and tridentate organic ligands. Examples of the multidentate ligand include β-diketones, β-ketoesters, and hydroxycarboxylic acids. Examples of the β-diketones include acetylacetone (ACAC), trifluoroacetylacetone, hexafluoroacetylacetone, benzoylacetone, thenoyltrifluoroacetone, dipilovaylmethane, dibenzoylmethane, and ascorbic acid. Examples of the β-ketoesters include methyl acetoacetate, ethyl acetoacetate, allyl acetoacetate, benzyl acetoacetate, n-propyl acetoacetate, isopropyl acetoacetate, n-butyl acetoacetate, isobutyl acetoacetate, tert-butyl acetoacetate, 2-methoxyethyl acetoacetate, and methyl 3-oxopentanoate. Examples of the hydroxycarboxylic acids and salts thereof include tartaric acid, citric acid, malic acid, gluconic acid, ferulic acid, lactic acid, glucuronic acid, and salts thereof. The multidentate ligand may include at least one selected from the group consisting of acetylacetone and trisodium citrate. The multidentate ligand may include at least one selected from the group consisting of acetylacetone and citric acid salts.

Aⁿ⁻ is an interlayer anion. Aⁿ⁻ is an inorganic ion or an organic ion. Examples of the inorganic ion include CO₃²⁻, NO₃⁻, Cl⁻, SO₄²⁻, Br⁻, OH⁻, F⁻, I⁻, Si₂O₅²⁻, B₄O₅(OH)₄²⁻, and PO₄³⁻. Examples of the organic ion include CH₃(CH₂)ₐSO₄⁻, CH₃(CH₂)ₐCOO⁻, and CH₃(CH₂)ₐHPO₄⁻. In the formulae, a is an integer greater than or equal to 0. Aⁿ⁻ is an anion intercalated between the layers of the metal hydroxide together with water molecules. Aⁿ⁻ has a charge and an ionic size, which are not limited to any particular value. The LDH 10 may include one type of Aⁿ⁻ or two or more types of Aⁿ⁻.

Fig. 2 is a schematic diagram of an exemplary crystal structure of the LDH represented by composition formula (1). As illustrated in Fig. 2, the LDH 10 includes an OH⁻ ion on each of the vertices of octahedra, in which M₁²⁺ or M₂³⁺ is the center. The metal hydroxide is represented by [M₁²⁺₁₋ₓM₂³⁺ₓ(OH)₂]^{x+}. The metal hydroxide has a layered structure in which hydroxide octahedra are two-dimensionally connected to one another with edges thereof being shared. The anion and water molecules are positioned between the layers of the metal hydroxide. The layers of the metal hydroxide serve as host layers 12, between which the anion and water molecules, which serve as guest layers 13, are intercalated. That is, the LDH 10, as a whole, has a sheet structure in which the host layers 12, which are formed of the metal hydroxide, and the guest layers 13, which are formed of the anion and water molecules, are alternately layered. The LDH 10 has a structure in which some of the M₁²⁺ present in the layers of the metal hydroxide is replaced by the M₂³⁺. Accordingly, a surface of the LDH 10 is typically positively charged.

### [Metal Particles]

Typically, the metal particles 11 have conductivity. The metal particles 11 include at least Ni and optionally a further transition metal. Examples of the transition metal include V, Cr, Mn, Fe, Co, Cu, W, and Ru. The transition metal present in the metal particles 11 may be the same metal as the ions of the at least two transition metals present in the LDH 10.

A shape of the metal particles 11 is not limited to any particular shape. The shape of the metal particles 11 is, for example, a particulate shape. When the shape of the metal particles 11 is a particulate shape, the metal particles 11 may have an average particle diameter that is not limited to any particular value. The average particle diameter of the metal particles 11 may be less than or equal to 100 nm or less than or equal to 50 nm. The lower limit of the average particle diameter of the metal particles 11 may be 10 nm or 20 nm. It is sufficient that the average particle diameter of the metal particles 11 be a diameter adequate to support a sufficient amount of the LDH. In this case, the metal particles 11 and the LDH 10 are not easily separated from each other even under the application of a voltage, and, consequently, degradation in catalytic performance can be inhibited more sufficiently. In addition, with this configuration, the catalyst 1 is more certain to have excellent durability in the anode reaction in water electrolysis, for example. The average particle diameter of the metal particles 11 can be determined by examining the metal particles 11, for example, by using a transmission electron microscope (TEM). Specifically, the average particle diameter can be determined as follows: for each of randomly selected 50 metal particles 11 that can be examined in their entireties, an average of a maximum diameter and a minimum diameter of each of the metal particles 11 is designated as the particle diameter of each of the metal particles 11, and an arithmetic mean of the particle diameters is designated as the average particle diameter.

As described above, in the catalyst 1 according to the present embodiment, a surface of the metal particles 11 is coated with the LDH 10. For example, the LDH 10 is in contact with the surface of the metal particles 11. The entirety of the surface of the metal particles 11 may be coated with the LDH 10. Only a portion or portions of the surface of the metal particles 11 may be coated with the LDH 10.

Regarding the catalyst 1 according to the present embodiment, a ratio R2 may be, for example, greater than or equal to 0.5 and less than or equal to 8.0, where the ratio R2 is a ratio of a mass of the metal particles 11 to a mass of the LDH 10. In this case, the catalyst 1 in which the metal particles 11 have a surface coated with the LDH 10 can be obtained more reliably. The ratio R2, which is a ratio of a mass of the metal particles 11 to a mass of the LDH 10, can be determined, for example, by using thermogravimetry (TG).

As illustrated in Fig. 1, the catalyst 1 according to the present embodiment includes the coating layer 15, which is provided, for example, on the surface of the metal particle 11. For example, the coating layer 15 includes the LDH 10. The coating layer 15 may include the LDH 10, and the LDH 10 may be a major component therein. The "major component" refers to a component that is present in the largest amount on a mass basis. The surface of the metal particles 11 may be substantially coated with the coating layer 15 that includes the LDH 10. In this instance, the coating layer 15 may be a layer consisting essentially of the LDH 10. The expression "consisting essentially of the LDH 10" means that a content of the LDH 10 in the layer is greater than or equal to 90 mass%. The coating layer 15 has an average thickness of, for example, less than or equal to 100 nm. With this configuration, it is possible to provide a catalyst 1 that is more certain to have excellent durability. The average thickness of the coating layer 15 may be less than or equal to 50 nm or less than or equal to 10 nm. Furthermore, the lower limit of the average thickness of the coating layer 15 may be 0.8 nm, 1.0 nm, or 1.2 nm. Specifically, the average thickness of the coating layer 15 can be determined by using thermogravimetry (TG), in accordance with a method described in the "Examples" section.

In the catalyst 1 according to the present embodiment, the degree to which the surface of the metal particles 11 is coated with the LDH 10 can be ascertained based on, for example, the average thickness of the coating layer 15, which is determined by using thermogravimetry (TG), in accordance with the method described in the "Examples" section, and the crystallite sizes of the LDH 10.

### [Method for Producing Catalyst]

A method for producing the catalyst 1 of the present embodiment includes adding a multidentate ligand to water to prepare an aqueous solution that includes ions of at least two transition metals and includes metal particles and the multidentate ligand; and converting the aqueous solution into an alkaline aqueous solution at ambient temperature. The metal particles include a transition metal that is the same as at least one of the ions of the at least two transition metals. The catalyst 1 produced by this production method has excellent durability. The "ambient temperature" refers to temperatures in a range of 20°C±15°C, as specified in Japanese Industrial Standards (JIS) Z 8703.

The ions of the at least two transition metals may include ions of at least two transition metals selected from the group consisting of V, Cr, Mn, Fe, Co, Ni, Cu, W, and Ru. The metal particles include a transition metal. As described above, the transition metal present in the metal particles includes a transition metal that is the same as at least one of the ions of the at least two transition metals. With this configuration, the catalyst 1 is more certain to have high catalytic activity.

The ions of the at least two transition metals may include ions of at least one transition metal selected from the group consisting of Ni and Fe. With this configuration, the catalyst 1 is more certain to have high catalytic activity.

The metal particles include Ni. The metal particles may be Ni particles. With either of these configurations, the catalyst can have high durability against alkalis.

The multidentate ligand may be any of the multidentate ligands mentioned above in the "LDH" section. The multidentate ligand may include at least one selected from the group consisting of acetylacetone and citric acid salts. In this case, the complexes are more certain to have improved dispersion stability.

The ions of the at least two transition metals, the metal particles, and the multidentate ligand may be added to an aqueous solution in any suitable order. To adjust the pH to a value greater than 7, that is, adjust the aqueous solution such that the aqueous solution becomes an alkaline aqueous solution, any method may be used. The method may be a method in which the aqueous solution that includes the ions of the at least two transition metals and includes the metal particles and the multidentate ligand is mixed with an aqueous alkali solution. Alternatively or additionally, the pH of the aqueous solution may be adjusted by adding a pH raising agent to the aqueous solution that includes the ions of the at least two transition metals and includes the metal particles and the multidentate ligand. The pH raising agent is not limited to any particular compound. For example, the pH raising agent has an epoxy group. Examples of the pH raising agent include propylene oxide, ethylene oxide and butylene oxide.

pH raising agents such as propylene oxide have an epoxy group. In instances where a pH raising agent such as propylene oxide is added to an aqueous solution, a ring-opening reaction of the epoxy group occurs in the presence of a nucleophile, such as chloride ions, and, therefore, the pH raising agent can scavenge hydrogen ions from the aqueous solution. Accordingly, the pH of the aqueous solution can increase, and, therefore, the aqueous solution can become alkaline. The pH of the aqueous solution that includes the ions of the at least two transition metals and includes the metal particles and the multidentate ligand is, for example, 1. When a pH raising agent is added to the aqueous solution, the pH of the aqueous solution, for example, gradually increases from 1, and eventually, the aqueous solution can become alkaline. The resulting pH of the aqueous solution is, for example, greater than or equal to 8 and less than or equal to 12.

In the method for producing the catalyst of the present embodiment, the pH of the alkaline aqueous solution described above may be further increased. The pH may be gradually increased.

An exemplary method for further increasing the pH of the alkaline aqueous solution described above is a method in which an alkaline aqueous solution is added to the aqueous solution that includes the transition metal ions, the metal particles, and the multidentate ligand. Alternatively or additionally, the pH of this aqueous solution can be increased by using the pH raising agent added to the aqueous solution that includes the transition metal ions, the metal particles, and the multidentate ligand. The addition of the pH raising agent to the aqueous solution causes a reaction for scavenging hydrogen ions from the aqueous solution to proceed. As a result, the pH of the aqueous solution gradually increases. It takes 24 hours or more, for example, several days, for the pH of the aqueous solution to increase to reach a steady state. When the pH of the aqueous solution has increased to reach a steady state, the pH of the aqueous solution is, for example, greater than or equal to 8 and less than or equal to 12.

The catalyst 1 obtained by using the method for producing the catalyst of the present embodiment is more certain to have improved durability in the anode reaction in water electrolysis, for example.

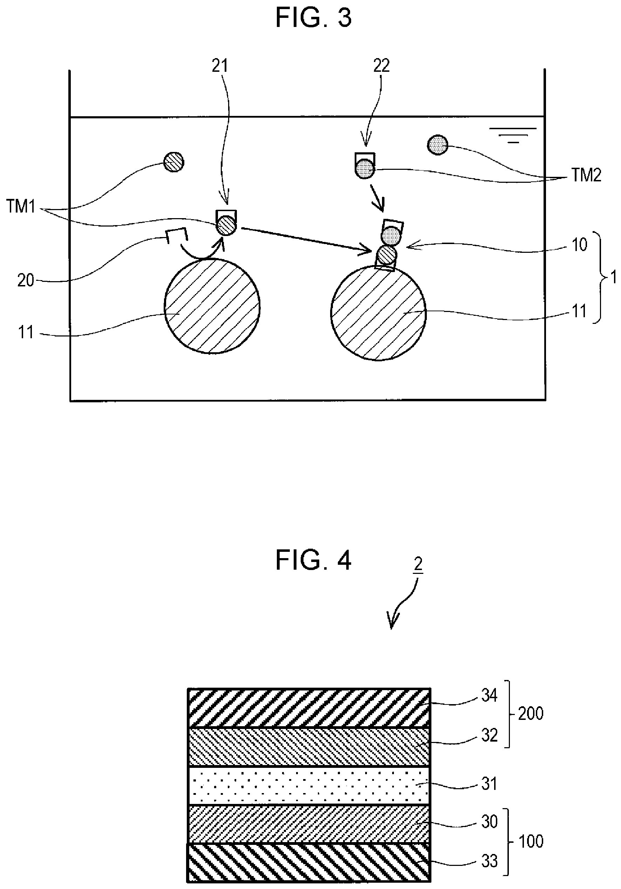

Fig. 3 is a schematic diagram of an exemplary catalyst synthesis mechanism. First, the pH of an aqueous solution that includes metal particles 11, transition metal ions TM1, transition metal ions TM2, and multidentate ligands 20 is increased. In this instance, some of the multidentate ligands 20 react with a surface of the metal particles 11, and, accordingly, the multidentate ligands 20 and transition metal ions TM1 that are portions of the metal particles 11 form complexes 21. In addition, in the aqueous solution, others of the multidentate ligands 20 and transition metal ions TM1 present in the aqueous solution form complexes 21, or others of the multidentate ligands 20 and transition metal ions TM2 present in the aqueous solution form complexes 22. Next, the complexes 21 and 22 react with each other at the surface of the metal particles 11, and, accordingly, the LDH 10 is synthesized at the surface of the metal particles 11. The presence of the multidentate ligands 20 in the complexes 21 and 22 inhibits the crystal growth of the LDH 10. In this manner, the catalyst 1, in which the metal particles 11 have a surface coated with the LDH 10, is prepared.

In the preparation of the catalyst 1, the ions of the at least two transition metals and the multidentate ligand present in the aqueous solution form complexes having a solubility in water at 20°C to 25°C of greater than or equal to 2 g/liter, for example. That is, in the preparation of the catalyst 1, the solubility of the complexes 21 and 22 in water at 20°C to 25°C is greater than or equal to 2 g/liter, for example. With such a concentration, the complexes 21 and 22 are readily soluble in water. The solubility of the complexes 21 and 22 in water can be determined, for example, by referring to a database, such as Chemical Book. In the preparation of the catalyst 1, acetylacetone or a citric acid salt, for example, can be used as the multidentate ligands 20.

The present inventors believe that appropriately adjusting a concentration of the multidentate ligands 20 that are to be present in the aqueous solution enables a reaction between the complexes 21 and the complexes 22 to readily occur. Specifically, the present inventors believe that appropriately adjusting the concentration of the multidentate ligands 20 that are to be present in the aqueous solution enables a reaction between the transition metal ions TM1 of the complexes 21 and the transition metal ions TM2 of the complexes 22 to readily occur, which in turn enables the LDH 10 to be readily formed. For example, if excessive amounts of the multidentate ligands 20 are present in the aqueous solution, a reaction between the multidentate ligands 20 and the transition metal ions TM1 or a reaction between the multidentate ligands 20 and the transition metal ions TM2 is likely to proceed. Consequently, the rate of the reaction between the transition metal ions TM1 present in the complexes 21 and the transition metal ions TM2 present in the complexes 22 may decrease. As a result, presumably, the LDH 10 is not readily formed in the aqueous solution. In the method for producing the catalyst 1 according to the present embodiment, the LDH 10 can be readily formed because, for example, the concentration of the multidentate ligands 20 is appropriately adjusted.

In the method for producing the catalyst 1, a ratio v is, for example, less than or equal to 0.4, where the ratio v is a ratio of the concentration of the multidentate ligand in the aqueous solution to a total concentration of the ions of the at least two transition metals in the aqueous solution. That is, the ratio v is a ratio of the concentration of the multidentate ligands 20 in the aqueous solution to a total concentration of the transition metal ions TM1 and TM2 in the aqueous solution, and the ratio v is less than or equal to 0.4, for example. In this case, the catalyst 1 is more certain to have excellent durability in the anode reaction in water electrolysis, for example. The ratio v may be greater than or equal to 0.2 and less than or equal to 0.5 or greater than or equal to 0.25 and less than or equal to 0.45.

In the preparation of the catalyst 1, a ratio R2/R1, which is a ratio of R2 to R1, is greater than or equal to 0.87 and less than or equal to 1.20, for example. R1 is a ratio of a mass of the metal particles 11 to a mass of the LDH 10, the mass of the metal particles 11 being a mass of the metal particles 11 used in the preparation of the catalyst 1, the mass of the LDH 10 being a mass of the LDH 10 in an instance in which all of the transition metal ions used in the preparation of the catalyst 1 contribute to the formation of the LDH 10. R2 is a ratio of a mass of the metal particles 11 in the obtained catalyst 1 to a mass of the LDH 10 in the obtained catalyst 1. When the ratio R2/R1 is within the above-mentioned numerical range, it is likely that the surface of the metal particles 11 is coated with the LDH 10.

For example, the catalyst 1 according to the present embodiment is used, as a catalyst for a water electrolysis cell, in a proton exchange membrane type water electrolysis device, an anion exchange membrane type water electrolysis device, or an alkali diaphragm type water electrolysis device. In any of these water electrolysis devices, the catalyst 1 may be used in at least one selected from the group consisting of a positive electrode and a negative electrode. In the instance where the catalyst 1 is used as a catalyst for a water electrolysis cell, the catalyst for a water electrolysis cell is more certain to have excellent durability in the anode reaction in water electrolysis, for example. In addition, the water electrolysis device can have excellent durability.

### (Second Embodiment)

Fig. 4 is a schematic cross-sectional view of an exemplary water electrolysis cell, according to the present embodiment.

The water electrolysis cell 2 includes an electrolyte membrane 31, a positive electrode 100, and a negative electrode 200. The electrolyte membrane 31 is disposed between the positive electrode 100 and the negative electrode 200, for example. At least one selected from the group consisting of the positive electrode 100 and the negative electrode 200 includes the catalyst 1, which is described in the first embodiment. The catalyst for a water electrolysis cell may be included in the positive electrode 100 or the negative electrode 200. Note that in instances where two or more types of metal particles are included in the catalyst for a water electrolysis cell included in the positive electrode or the negative electrode, it is sufficient that at least one of the types of metal particles have a surface coated with the layered double hydroxide.

The electrolyte membrane 31 may be an electrolyte membrane having ionic conductivity. The electrolyte membrane 31 is not limited to any particular type. The electrolyte membrane 31 may include a proton exchange membrane. The electrolyte membrane 31 may be a proton exchange membrane. The electrolyte membrane 31 may include an anion exchange membrane. The electrolyte membrane 31 may be an anion exchange membrane. The electrolyte membrane 31 is configured such that oxygen gas generated at the positive electrode 100 and hydrogen gas generated at the negative electrode 200 do not easily mix with each other.

The positive electrode 100 includes a catalyst layer 30, for example. The catalyst layer 30 may be provided on one of major surfaces of the electrolyte membrane 31. The "major surfaces" refers to surfaces having the largest area of the electrolyte membrane 31. The catalyst layer 30 includes a catalyst, which may be the catalyst 1 of the first embodiment. The positive electrode 100 may further include a gas diffusion layer 33, which is porous and conductive and may be provided on the catalyst layer 30.

The negative electrode 200 includes a catalyst layer 32, for example. The catalyst layer 32 may be provided on the other of the major surfaces of the electrolyte membrane 31. That is, the catalyst layer 32 may be provided on the major surface of the electrolyte membrane 31 opposite to the major surface on which the catalyst layer 30 is provided. A catalyst that may be used in the catalyst layer 32 is not limited to any particular type. The catalyst may be platinum or the catalyst 1. The negative electrode 200 may further include a gas diffusion layer 34, which is porous and conductive and may be provided on the catalyst layer 32.

With any of the configurations described above, the water electrolysis cell 2 can have high durability; this is because at least one selected from the group consisting of the positive electrode 100 and the negative electrode 200 includes the catalyst 1.

### (Third Embodiment)

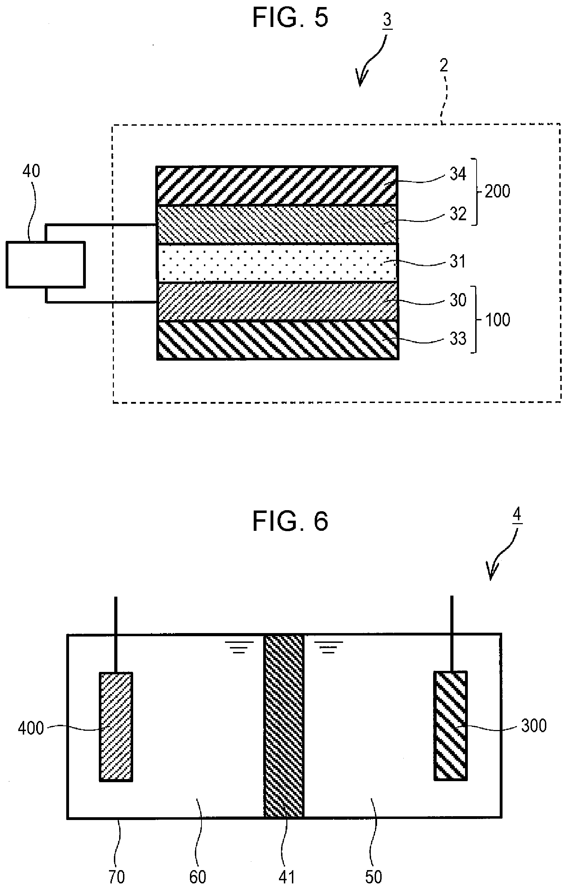

Fig. 5 is a schematic cross-sectional view of an exemplary water electrolysis device, according to the present embodiment.

A water electrolysis device 3 includes a water electrolysis cell 2 and a voltage applicator 40. The water electrolysis cell 2 is similar to the water electrolysis cell 2 of the second embodiment, and, therefore, descriptions thereof will be omitted.

The voltage applicator 40 is connected to a positive electrode 100 and a negative electrode 200 of the water electrolysis cell 2. The voltage applicator 40 is a device that applies a voltage between the positive electrode 100 and the negative electrode 200 in the water electrolysis cell 2.

The voltage applicator 40 increases the potential of the positive electrode 100 and decreases the potential of the negative electrode 200. The voltage applicator 40 is not limited to any particular type provided that the voltage applicator 40 can apply a voltage between the positive electrode 100 and the negative electrode 200. The voltage applicator 40 may be a device that adjusts the voltage to be applied between the positive electrode 100 and the negative electrode 200. Specifically, in instances where the voltage applicator 40 is connected to a DC power supply, such as a battery, a solar cell, or a fuel cell, the voltage applicator 40 includes a DC/DC converter. In instances where the voltage applicator 40 is connected to an AC power supply, such as a commercial power supply, the voltage applicator 40 includes an AC/DC converter. The voltage applicator 40 may be a power-type power supply that adjusts the voltage that is applied between the positive electrode 100 and the negative electrode 200 and adjusts the current that flows between the positive electrode 100 and the negative electrode 200, such that the power to be supplied to the water electrolysis device 3 is adjusted to a predetermined set value.

With any of the configurations described above, the water electrolysis device 3 can have high durability.

### (Fourth Embodiment)

Fig. 6 is a schematic cross-sectional view of another exemplary water electrolysis cell, according to the present embodiment.

The water electrolysis cell according to the present embodiment is, for example, an alkaline water electrolysis cell 4, which utilizes an aqueous alkali solution. **In** alkaline water electrolysis, an aqueous alkali solution is used. Examples of the aqueous alkali solution include aqueous potassium hydroxide solutions and aqueous sodium hydroxide solutions.

The alkaline water electrolysis cell 4 includes a positive electrode 300 and a negative electrode 400. The alkaline water electrolysis cell 4 further includes an electrolysis chamber 70, a first space 50, and a second space 60. The positive electrode 300 is provided in the first space 50. The negative electrode 400 is provided in the second space 60. The alkaline water electrolysis cell 4 includes a diaphragm 41. The diaphragm 41 is provided within the electrolysis chamber 70 and separates the first space 50 from the second space 60. At least one selected from the group consisting of the positive electrode 300 and the negative electrode 400 includes the catalyst 1.

The positive electrode 300 may include the catalyst 1. For example, the positive electrode 300 may include a catalyst layer, and the catalyst 1 may be included in the catalyst layer.

The negative electrode 400 may include the catalyst 1. For example, the negative electrode 400 may include a catalyst layer, and the catalyst 1 may be included in the catalyst layer.

The diaphragm 41 is a diaphragm for alkaline water electrolysis, for example.

The positive electrode 300 may be disposed in contact with the diaphragm 41, or the positive electrode 300 may be spaced apart from the diaphragm 41. The negative electrode 400 may be disposed in contact with the diaphragm 41, or the negative electrode 400 may be spaced apart from the diaphragm 41.

The alkaline water electrolysis cell 4 produces hydrogen and oxygen by electrolyzing an aqueous alkali solution. An aqueous solution containing a hydroxide of an alkali metal or an alkaline earth metal may be supplied to the first space 50 of the alkaline water electrolysis cell 4. An aqueous alkali solution may be supplied to the second space 60 of the alkaline water electrolysis cell 4. The production of hydrogen and oxygen is carried out by performing electrolysis while discharging an aqueous alkali solution having a predetermined concentration from the first space 50 and the second space 60.

With any of the configurations described above, the alkaline water electrolysis cell 4 can have high durability; this is because at least one selected from the group consisting of the positive electrode 300 and the negative electrode 400 includes the catalyst 1.

### (Fifth Embodiment)

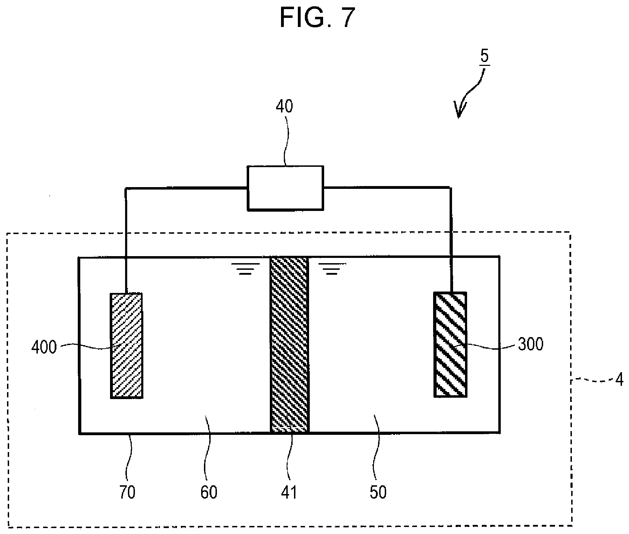

Fig. 7 is a schematic cross-sectional view of another exemplary water electrolysis device, according to the present embodiment.

The water electrolysis device according to the present embodiment is, for example, an alkaline water electrolysis device 5, which utilizes an aqueous alkali solution. The alkaline water electrolysis device 5 includes an alkaline water electrolysis cell 4 and a voltage applicator 40. The alkaline water electrolysis cell 4 is similar to the alkaline water electrolysis cell 4 of the fourth embodiment, and, therefore, descriptions thereof will be omitted.

The voltage applicator 40 is connected to a positive electrode 300 and a negative electrode 400 of the alkaline water electrolysis cell 4. The voltage applicator 40 is a device that applies a voltage between the positive electrode 300 and the negative electrode 400 in the alkaline water electrolysis cell 4.

With this configuration, the alkaline water electrolysis device 5 can have high durability.

### EXAMPLES

The present disclosure will now be described in more detail with reference to examples. Note that the examples described below are merely illustrative of the present disclosure and are not to be construed as limiting the present disclosure.

### (Example 1)

A mixed solvent was prepared by mixing 671 µL of water with 1007 µL of ethanol. The ethanol had been purchased from FUJIFILM Wako Pure Chemical Corporation. In the mixed solvent, a volume ratio between the water and the ethanol was 2:3. 427.8 mg of nickel chloride hexahydrate and 243.3 mg of iron chloride hexahydrate were dissolved in the mixed solvent, and, accordingly, a solution was prepared. The nickel chloride hexahydrate and the iron chloride hexahydrate had been purchased from FUJIFILM Wako Pure Chemical Corporation. The nickel chloride hexahydrate and the iron chloride hexahydrate were dissolved in the mixed solvent such that a total concentration of the Ni ions and Fe ions became 1.0 M, and a ratio of the amount of substance of the Fe ions to the total amount of substance of the Ni ions and the Fe ions became 0.33. "M" denotes moles per cubic decimeter mol/dm³. Furthermore, 92 µL of acetylacetone (ACAC), which was used as a multidentate ligand, was added to the solution, and accordingly, a multidentate-ligand-containing solution was obtained. The acetylacetone had been purchased from Sigma-Aldrich. In the multidentate-ligand-containing solution, the amount of substance of the acetylacetone was one-third of the total amount of substance of the Ni ions and the Fe ions. The multidentate-ligand-containing solution was stirred for 30 minutes.

Next, 280 mg of Ni particles were added to the multidentate-ligand-containing solution, and, accordingly, a Ni particle-containing solution was obtained. The Ni particle-containing solution had a pH of 1. The Ni particles had an average particle diameter of 20 nm. The Ni particles had been purchased from US Research Nanomaterials, Inc. 915 µL of propylene oxide (POX), which was used as a pH raising agent, was added to the Ni particle-containing solution at 25°C, and, accordingly, a mixed solution was obtained. The pH of the mixed solution remained unchanged at 1. An amount of addition of the POX was adjusted such that a ratio of the amount of substance of the POX to the amount of substance of the chloride ions in the mixed solution became 2. The obtained mixed solution was stirred for 1 minute. In this instance, the pH of the solution gradually increased because the POX gradually scavenged hydrogen ions in the solution. The obtained solution was allowed to stand for approximately three days. The pH of the solution in this instance was 9.5. After the obtained solution was allowed to stand for approximately three days, a catalyst of Example 1 was collected therefrom.

In this case, an amount of the LDH that would be formed if all the Ni and Fe present in the solution ideally reacted was estimated to be 304 mg, from the amounts of the nickel chloride hexahydrate and iron chloride hexahydrate that were added to the mixed solvent. Accordingly, a ratio R1 was 0.9. Herein, the ratio R1 is a ratio of the mass of the added Ni particles to the estimated value of the amount of the LDH that would be formed, in the preparation of the catalyst. Note that the estimated value of the amount of the LDH that would be formed was derived as follows. The amount of substance of the Ni ions and the amount of substance of the Fe ions were calculated from the amounts of the nickel chloride hexahydrate and iron chloride hexahydrate that were used in the preparation of the LDH. In addition, since the compounds used in the preparation of the LDH were chlorides, it was assumed that the LDH to be formed would have a composition of Ni₂Fe₁(OH)₆Cl·1.5H₂O, from the standpoint of electrical neutrality. A molecular weight of the LDH is 337.7 g/mol. Based on the composition of the LDH to be formed, the amount of substance of the LDH to be formed is equal to the amount of substance of the iron chloride hexahydrate that was used. In Example 1, the amount of substance of the iron chloride hexahydrate that was used was 0.9 mmol. Accordingly, the estimated value of the amount of the LDH that would be formed was calculated to be 304 mg.

### (Example 2)

A catalyst of Example 2 was prepared as in Example 1, except that the amount of addition of the Ni particles was 700 mg. In Example 2, the ratio R1 was 2.3.

### (Example 3)

A catalyst of Example 3 was prepared as in Example 1, except that the amount of addition of the Ni particles was 2400 mg. In Example 3, the ratio R1 was 7.9.

### (Comparative Example 1)

An LDH of Comparative Example 1 was prepared as in Example 1, except that no Ni particles were added before the addition of POX, unlike in the preparation of the catalyst of Example 1. The obtained LDH was redispersed in a mixed solvent of water and ethanol, and, accordingly, a dispersion was obtained. In the mixed solvent, a volume ratio between the water and the ethanol was 1:4. 3360 mg of Ni particles were added to the dispersion, and, accordingly, the catalyst of Comparative Example 1 was prepared. In Comparative Example 1, the ratio R1 was 11.

### (Comparative Example 2)

A catalyst of Comparative Example 2 was prepared as in Comparative Example 1, except that 280 mg of Ni particles were added to the dispersion unlike in the preparation of the catalyst of Comparative Example 1. In Comparative Example 2, the ratio R1 was 0.9.

### [Evaluation 1: Determination of Structure of Catalyst]

The crystal phase of the catalysts of the Examples and the Comparative Examples was measured to obtain XRD profiles of the catalysts of the Examples and the Comparative Examples, by using an X-ray diffractometer X'Pert PRO, manufactured by PANalytical. The measurement conditions included a voltage of 45 kV, a current of 40 mA, and a measurement range of 5° to 70°.

In the XRD profiles of the catalysts of the Examples and the Comparative Examples, peaks corresponding to an LDH and Ni metal were identified. The results indicated that the catalysts of the Examples and the Comparative Examples were mixtures of an LDH and Ni metal. In addition, the crystallite sizes of the LDH in the stacking direction and the planar direction were calculated from the full widths at half maximum of the peak corresponding to the (003) plane of the LDH and the peak corresponding to the (110) plane thereof, by using the Scherrer equation. The planar direction of the LDH is a direction perpendicular to the stacking direction of the LDH. In the catalyst of Example 1, the crystallite size of the LDH in the stacking direction was 3.4 nm, and the crystallite size of the LDH in the planar direction was 8.0 nm. In the catalyst of Example 2, the crystallite size of the LDH in the stacking direction was 3.2 nm, and the crystallite size of the LDH in the planar direction was 6.1 nm. In the catalyst of Example 3, the crystallite size of the LDH in the stacking direction was 2.9 nm, and the crystallite size of the LDH in the planar direction was 5.8 nm.

### [Evaluation 2: Examination of Morphology of Catalyst]

A morphology of the catalysts of the Examples and the Comparative Examples was examined by using a transmission electron microscope (TEM), and, accordingly, a state of the LDH in the catalysts of the Examples and the Comparative Examples was evaluated.

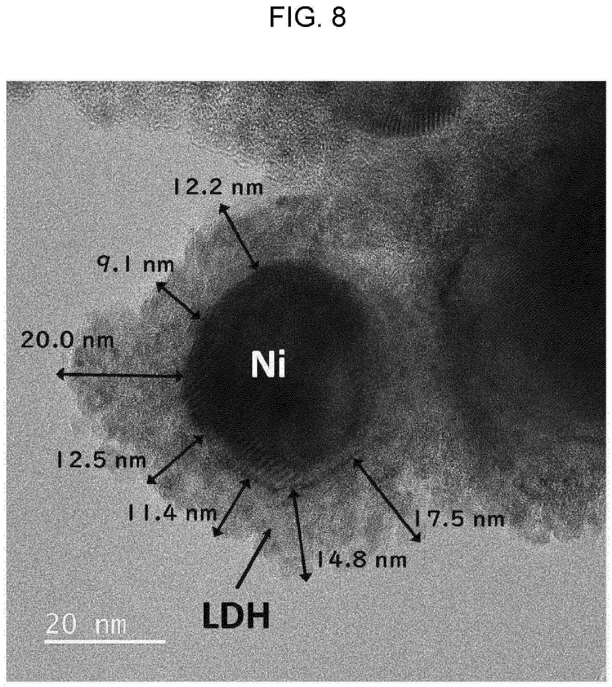

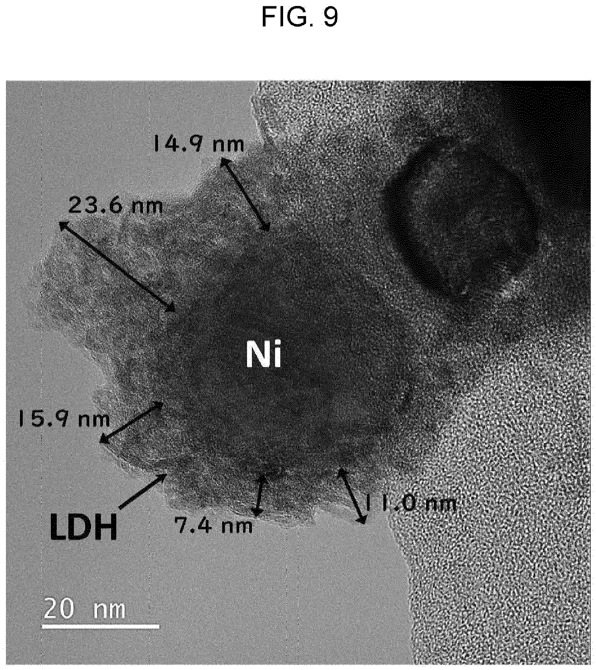

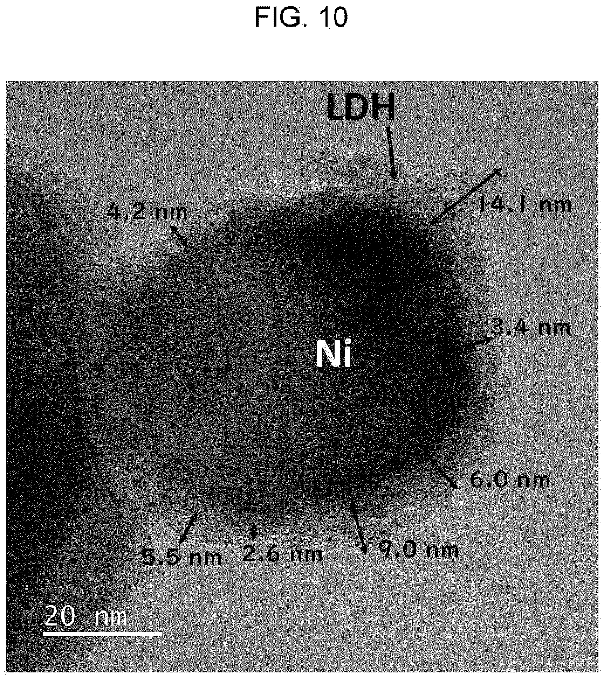

Fig. 8 is an image of the catalyst of Example 1 as observed with the transmission electron microscope (TEM). Fig. 9 is an image of the catalyst of Example 2 as observed with the TEM. Fig. 10 is an image of the catalyst of Example 3 as observed with the TEM. In the catalysts of Examples 1 to 3, a coating layer of the LDH, which included a hexagonal crystallite, was formed on a surface of the Ni particles, as shown in Figs. 8 to 10. In addition, in the catalysts of Examples 1 to 3, the coating layer coated the entirety of the surface of the Ni particles. In Figs. 8 to 10, the length of the double-headed arrow corresponds to the thickness of the coating layer. In the catalysts of Examples 1 and 2, the thickness of the coating layer was approximately 10 nm to 20 nm, as shown in Figs. 8 and 9. In the catalyst of Example 3, most of the thickness of the coating layer was less than or equal to 10 nm, as shown in Fig. 10. Furthermore, a coating ratio of the LDH on the surface of the Ni particles as seen in each of Figs. 8 to 10 was 100% for Examples 1 and 2 and 92% for Example 3. Note that the coating ratio is a ratio of a portion or portions of the periphery of the surface of the Ni particles coated with the LDH to the entire periphery of the surface of the Ni particles as seen in each of Figs. 8 to 10. In the catalysts of Examples 1 and 2, the entire periphery of the surface of the Ni particles was coated with the LDH, as shown in Figs. 8 and 9. In the catalyst of Example 3, the entire periphery of the surface of the Ni particles except for an upper portion of the periphery was coated with the LDH, as shown in Fig. 10.

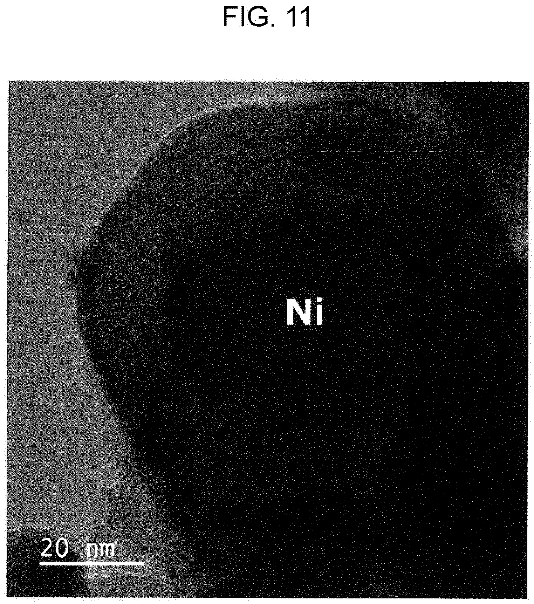

Fig. 11 is an image of the catalyst of Comparative Example 1 as observed with the TEM. In the catalyst of Comparative Example 1, the LDH adhered to a portion of the surface of the Ni particles, as shown in Fig. 11. In the catalyst of Comparative Example 1, however, no coating layer of an LDH including a hexagonal crystallite was formed. That is, in Comparative Example 1, the surface of the Ni particles was not coated with an LDH.

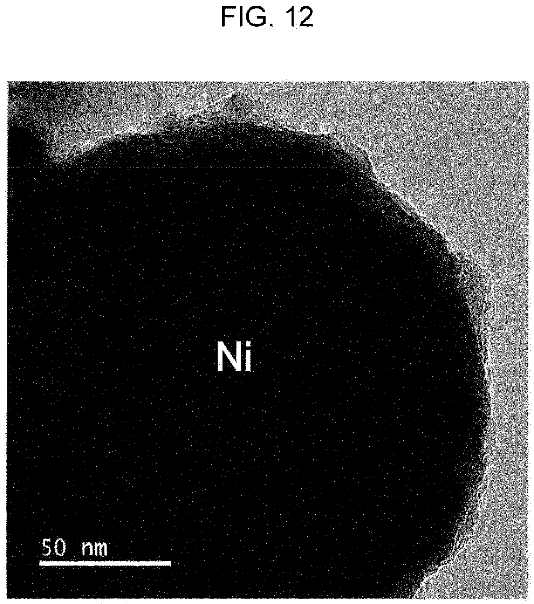

Fig. 12 is an image of the catalyst of Comparative Example 2 as observed with the TEM. In the catalyst of Comparative Example 2, a coating layer of an LDH including a hexagonal crystallite was formed only on a portion of the surface of the Ni particles, as shown in Fig. 12. In Comparative Example 2, the coating ratio of the LDH on the surface of the Ni particles was 53%. Accordingly, it is difficult to say that in the catalyst of Comparative Example 2, the surface of the metal particles was coated with a layered double hydroxide.

The above results indicated that the methods for producing the catalysts of Examples 1 to 3 enabled a coating layer including an LDH to be formed on the surface of the Ni particles.

### [Evaluation 3: Thermogravimetry (TG)]

Regarding the catalysts of the Examples and the Comparative Examples, changes in the mass of each of the catalysts in the process of heating were measured by using a thermogravimetric analyzer. The heating was performed over a range of room temperature to 400°C in an air atmosphere. Based on the measurement results, the ratio of the mass of the Ni metal to the mass of the LDH was calculated for each of the catalysts.

In thermogravimetry, in a temperature range of 400°C and less, an LDH undergoes thermal decomposition as shown in equation (2) below.

Ni₂Fe₁(OH)₆Cl·1.5H₂O → 2NiO + 0.5Fe₂O₃ ... (2)

Equation (2) indicates that the thermal decomposition of the LDH reduces the mass of the solids by 32%. On the other hand, at temperatures of 400°C and less, Ni metal does not experience changes in mass due to oxidation. The catalyst of each of the Examples included an LDH and Ni particles. For each of the catalysts, a ratio of the mass of the LDH to the mass of the catalyst is designated as x. In this instance, x can be expressed as x = (a rate of reduction in the mass of the catalyst in thermogravimetry)/0.32. Thermogravimetry was performed on the catalysts of Examples 1 to 3, and x was calculated according to the equation shown above. The results are shown in Table 1.

Next, regarding the catalysts of Examples 1 to 3, a ratio R2 was calculated. The ratio R2 is a ratio of the mass of the Ni particles in the obtained catalyst to the mass of the LDH in the obtained catalyst. The ratio R2 can be expressed as R2 = (1/x) - 1. The results are shown in Table 1. The ratio R1 is a value calculated from the mass of the Ni particles used in the preparation of the catalyst and a mass of the LDH. The ratio R2 is a value calculated from the results of analysis of each of the catalysts in the thermogravimetry. In Examples 1 to 3, the ratio R2/R1, which is a ratio of R2 to R1, was greater than or equal to 0.87 and less than or equal to 1.20, as shown in Table 1. That is, in Examples 1 to 3, the value of R1 and the value of R2 were well matched to each other.

Furthermore, regarding the catalysts of Comparative Examples 1 and 2, the ratio R2 was calculated in the same manner. The results are shown in Table 1. In Comparative Examples 1 and 2, the value of R2 was significantly greater than the value of R1, as shown in Table 1.

**[Table 1]**

| | R1 | x | R2 | R2/R1 |
|---|---|---|---|---|
| Example 1 | 0.9 | 0.5 | 1 | 1.11 |
| Example 2 | 2.3 | 0.33 | 2 | 0.87 |
| Example 3 | 7.9 | 0.12 | 7.3 | 0.92 |
| Comparative Example 1 | 11 | 0.05 | 19 | 1.73 |
| Comparative Example 2 | 0.9 | 0.10 | 8.1 | 9 |

In the catalysts of Examples 1 to 3, the ratios R1 and R2 of the catalyst of Example 1 were lowest, whereas the ratios R1 and R2 of the catalyst of Example 3 were the highest, as shown in Table 1. The results of [Evaluation 2] and [Evaluation 3] indicated that the greater the mass of the Ni particles with respect to the mass of the LDH, the smaller the thickness of the coating layer on the surface of the Ni particles.

In the catalysts of Comparative Examples 1 and 2, the value of the ratio R2, which is a ratio of the mass of the Ni particles in the prepared catalyst to the mass of the LDH in the prepared catalyst, was greater than the value of the ratio R1, which is a ratio of the mass of the added Ni particles to the mass of the LDH that would be theoretically formed, in the preparation of the catalyst, as shown in Table 1. In the methods for preparing the catalysts of Comparative Examples 1 and 2, the LDH is first prepared. Next, the LDH is dispersed in the mixed solvent of water and ethanol, and thereafter, the Ni particles are added. In this manner, the catalysts are prepared. In such preparation methods, the LDH has been dispersed in the mixed solvent, and, therefore, when the Ni particles are added, the surface of the Ni particles cannot be easily coated with the LDH. As a result, some of the LDH dispersed in the mixed solvent is removed, without being coated onto the surface of the Ni particles. Presumably, this is the reason that the values of the ratios R2 regarding the catalysts of Comparative Examples 1 and 2 were greater than the values of the ratios R2 regarding the catalysts of Examples 1 to 3.

The above results demonstrate that by adjusting the ratio R1 when the Ni particles were added in the synthesis of the LDH in the methods for producing a catalyst, catalysts having an adjusted ratio R2 could be obtained, where the ratio R2 is a ratio of the mass of the Ni particles to the mass of the LDH. Furthermore, the results of Example 1 and Comparative Example 2 demonstrate that even when the values of the ratio R1 were the same, in the instance where the timing of addition of the Ni particles in the preparation of the catalyst was adjusted, it was possible to obtain a catalyst having an adjusted ratio R2, where the ratio R2 is a ratio of the mass of the Ni particles to the mass of the LDH.

### [Evaluation 4: Evaluation of Durability of Catalyst]

Durability of the catalysts of Examples 1 to 3 and Comparative Examples 1 and 2 was evaluated. The measurement was carried out by using a potentiostat VersaSTAT 4, manufactured by Princeton Applied Research, and a rotating electrode AFE3T050GC, manufactured by Pine Research. The current produced by the anode reaction in a water electrolysis cell was measured by using a rotating disk electrode (RDE) method under the following measurement conditions. The anode reaction is an oxygen evolution reaction. The results are shown in Table 2.

### [Measurement Conditions]

- Solution: a 1 M KOH solution
- Potential: 1.0 V to 1.65 V (vs. reversible hydrogen electrode (RHE))
- Number of cycles: 120 cycles
- Potential sweep rate: 10 mV/sec
- Electrode rotation speed: 1500 revolutions/minute (rpm)
- Amount of catalyst carried by electrode: 0.2 mg/cm²

Table 2 shows a "current retention ratio", regarding an oxygen evolution current at a potential of 1.53 V. The current retention ratio is a ratio of the value of the oxygen evolution current in the 120th cycle to the value of the oxygen evolution current in the 1st cycle. The potential of 1.53 V is a potential at which an overvoltage with respect to the theoretical voltage required for the oxygen evolution reaction to proceed is 0.3 V.

**[Table 2]**

| | Current retention ratio [%] |
|---|---|
| Example 1 | 89 |
| Example 2 | 84 |
| Example 3 | 89 |
| Comparative Example 1 | 62 |
| Comparative Example 2 | 60 |

The current retention ratios associated with the catalysts of Examples 1 to 3 were higher than the current retention ratios associated with the catalysts of Comparative Examples 1 and 2. That is, the catalysts of Examples 1 to 3 had excellent durability in the anode reaction in water electrolysis. The results of Evaluations 1 to 4 demonstrate that as a result of coating the Ni particle with the coating layer that included an LDH, catalysts having excellent durability could be obtained.

Note that based on the above description, many modifications and other embodiments of the present disclosure will be apparent to those skilled in the art. Accordingly, the above description is to be construed as being illustrative only and is provided to teach those skilled in the art the best modes for carrying out the present disclosure.

### Industrial Applicability

The catalyst of the present disclosure can be used for the anode reaction in water electrolysis.

### Reference Signs List

1 Catalyst
2 Water electrolysis cell
3 Water electrolysis device
4 Alkaline water electrolysis cell
5 Alkaline water electrolysis device
10 LDH
11 Metal particle
12 Host layer
13 Guest layer
15 Coating layer
20 Multidentate ligand
21, 22 Complex
30, 32 Catalyst layer
31 Electrolyte membrane
33, 34 Gas diffusion layer
40 Voltage applicator
41 Diaphragm
50 First space
60 Second space
70 Electrolysis chamber
100, 300 Positive electrode
200, 400 Negative electrode

## Claims

1. A catalyst comprising:
a layered double hydroxide including ions of at least two transition metals; and
a metal particle including at least one transition metal, the metal particle having a surface coated with the layered double hydroxide;
**characterised in that** the metal particle includes Ni.

2. The catalyst according to claim 1, wherein a ratio R2/R1 is greater than or equal to 0.87 and less than or equal to 1.20, the ratio R2/R1 being a ratio of R2 to R1, where
R1 is defined as a ratio of a mass of the metal particle to a mass of the layered double hydroxide, the mass of the metal particle being a mass of the metal particle used in preparation of the catalyst, the mass of the layered double hydroxide being a mass of the layered double hydroxide in an instance in which all ions of transition metals used in the preparation of the catalyst contribute to formation of the layered double hydroxide, the transition metals being identical to the at least two transition metals, and
R2 is defined as a ratio of a mass of the metal particle in the catalyst to a mass of the layered double hydroxide in the catalyst.

3. The catalyst according to claim 1 or 2, further comprising a coating layer that is provided on the surface of the metal particle and that includes the layered double hydroxide, wherein the coating layer has an average thickness of less than or equal to 100 nm.

4. The catalyst according to any one of claims 1 to 3, wherein the layered double hydroxide has a crystallite size of less than or equal to 10 nm.

5. The catalyst according to any one of claims 1 to 4, wherein the layered double hydroxide includes a multidentate ligand.

6. The catalyst according to claim 5, wherein the multidentate ligand includes at least one selected from the group consisting of acetylacetone and a citric acid salt.

7. The catalyst according to any one of claims 1 to 6, wherein the ions of the at least two transition metals include ions of at least two transition metals selected from the group consisting of V, Cr, Mn, Fe, Co, Ni, Cu, W, and Ru.

8. The catalyst according to any one of claims 1 to 7, wherein the ions of the at least two transition metals include an ion of at least one transition metal selected from the group consisting of Ni and Fe.

9. The catalyst according to any one of claims 1 to 8, wherein the metal particle has an average particle diameter of less than or equal to 50 nm.

10. A catalyst for a water electrolysis cell, comprising the catalyst according to any one of claims 1 to 9.

11. A water electrolysis cell comprising:
a positive electrode including the catalyst for a water electrolysis cell according to claim 10;
a negative electrode; and
an electrolyte.

12. A water electrolysis cell comprising:
a positive electrode;
a negative electrode including the catalyst for a water electrolysis cell according to claim 10; and
an electrolyte.

13. A water electrolysis device comprising:
the water electrolysis cell according to claim 11 or 12; and
a voltage applicator that applies a voltage between the positive electrode and the negative electrode, the voltage applicator being connected to the positive electrode and the negative electrode.

14. A method for producing a catalyst according to claim 1, the method comprising:
adding a multidentate ligand to prepare an aqueous solution that includes a metal particle, the multidentate ligand, and ions of at least two transition metals, the metal particle including a transition metal that is the same as at least one of the ions of the at least two transition metals; and
converting the aqueous solution into an alkaline aqueous solution at ambient temperature.

15. The method for producing a catalyst according to claim 14, wherein
the catalyst includes a layered double hydroxide and the metal particle, and
a ratio R2/R1 is greater than or equal to 0.87 and less than or equal to 1.20, the ratio R2/R1 being a ratio of R2 to R1, where
R1 is defined as a ratio of a mass of the metal particle to a mass of the layered double hydroxide, the mass of the metal particle being a mass of the metal particle added to the aqueous solution, the mass of the layered double hydroxide being a mass of the layered double hydroxide in an instance in which all of the ions of the at least two transition metals in the aqueous solution contribute to formation of the layered double hydroxide, and
R2 is defined as a ratio of a mass of the metal particle in the catalyst to a mass of the layered double hydroxide in the catalyst.

16. The method for producing a catalyst according to claim 14 or 15, further comprising increasing a pH of the alkaline aqueous solution.

17. The method for producing a catalyst according to any one of claims 14 to 16, wherein the ions of the at least two transition metals include ions of at least two transition metals selected from the group consisting of V, Cr, Mn, Fe, Co, Ni, Cu, W, and Ru.

18. The method for producing a catalyst according to any one of claims 14 to 17, wherein the ions of the at least two transition metals include an ion of at least one transition metal selected from the group consisting of Ni and Fe.

19. The method for producing a catalyst according to any one of claims 14 to 18, wherein the ions of the at least two transition metals and the multidentate ligand form complexes having a solubility in water at 20°C to 25°C of greater than or equal to 2 g/liter.

20. The method for producing a catalyst according to any one of claims 14 to 19, wherein the multidentate ligand includes at least one selected from the group consisting of acetylacetone and a citric acid salt.

21. The method for producing a catalyst according to any one of claims 14 to 20, wherein a ratio of a concentration of the multidentate ligand in the aqueous solution to a total concentration of the ions of the at least two transition metals in the aqueous solution is less than or equal to 0.4.

## Patentansprüche

1. Katalysator, umfassend:
ein geschichtetes Doppelhydroxid, das Ionen von mindestens zwei Übergangsmetallen enthält; und
ein Metallpartikel, das mindestens ein Übergangsmetall enthält, wobei das Metallpartikel eine mit dem geschichteten Doppelhydroxid beschichtete Oberfläche aufweist;
**dadurch gekennzeichnet, dass** das Metallpartikel Ni enthält.

2. Katalysator gemäß Anspruch 1, wobei ein Verhältnis R2/R1 größer oder gleich 0,87 und kleiner oder gleich 1,20 ist, wobei das Verhältnis R2/R1 ein Verhältnis von R2 zu R1 ist, wobei
R1 als ein Verhältnis einer Masse des Metallpartikels zu einer Masse des geschichteten Doppelhydroxids definiert ist, wobei die Masse des Metallpartikels die Masse des bei der Herstellung des Katalysators verwendeten Metallpartikels ist und die Masse des geschichteten Doppelhydroxids die Masse des geschichteten Doppelhydroxids in einem Fall ist, in dem alle bei der Herstellung des Katalysators verwendeten Übergangsmetallionen zur Bildung des geschichteten Doppelhydroxids beitragen, wobei die Übergangsmetalle identisch mit den mindestens zwei Übergangsmetallen sind, und
R2 als ein Verhältnis einer Masse des Metallpartikels im Katalysator zu einer Masse des geschichteten Doppelhydroxids im Katalysator definiert ist.

3. Katalysator gemäß Anspruch 1 oder 2, ferner umfassend eine Beschichtungsschicht, die auf der Oberfläche des Metallpartikels vorgesehen ist und das geschichtete Doppelhydroxid enthält, wobei die Beschichtungsschicht eine mittlere Dicke von kleiner oder gleich 100 nm aufweist.

4. Katalysator gemäß einem der Ansprüche 1 bis 3, wobei das geschichtete Doppelhydroxid eine Kristallitgröße von kleiner oder gleich 10 nm aufweist.

5. Katalysator gemäß einem der Ansprüche 1 bis 4, wobei das geschichtete Doppelhydroxid einen mehrzähnigen Liganden enthält.

6. Katalysator gemäß Anspruch 5, wobei der mehrzähnige Ligand mindestens eines aus der Gruppe bestehend aus Acetylaceton und einem Citronensäuresalz enthält.

7. Katalysator gemäß einem der Ansprüche 1 bis 6, wobei die Ionen der mindestens zwei Übergangsmetalle Ionen von mindestens zwei Übergangsmetallen enthalten, die aus der Gruppe bestehend aus V, Cr, Mn, Fe, Co, Ni, Cu, W und Ru ausgewählt sind.

8. Katalysator gemäß einem der Ansprüche 1 bis 7, wobei die Ionen der mindestens zwei Übergangsmetalle ein Ion mindestens eines Übergangsmetalls umfassen, das aus der Gruppe bestehend aus Ni und Fe ausgewählt ist.

9. Katalysator gemäß einem der Ansprüche 1 bis 8, wobei das Metallpartikel einen mittleren Partikeldurchmesser von kleiner oder gleich 50 nm aufweist.

10. Katalysator für eine Wasserelektrolysezelle, umfassend den Katalysator gemäß einem der Ansprüche 1 bis 9.

11. Wasserelektrolysezelle, umfassend:
eine positive Elektrode, die den Katalysator für eine Wasserelektrolysezelle gemäß Anspruch 10 enthält;
eine negative Elektrode; und
einen Elektrolyten.

12. Wasserelektrolysezelle, umfassend:
eine positive Elektrode;
eine negative Elektrode, die den Katalysator für eine Wasserelektrolysezelle gemäß Anspruch 10 enthält; und
einen Elektrolyten.

13. Wasserelektrolysevorrichtung, umfassend:
die Wasserelektrolysezelle gemäß Anspruch 11 oder 12; und
eine Spannungseinrichtung, die eine Spannung zwischen der positiven Elektrode und der negativen Elektrode anlegt, wobei die Spannungseinrichtung mit der positiven Elektrode und der negativen Elektrode verbunden ist.

14. Verfahren zur Herstellung eines Katalysators gemäß Anspruch 1, wobei das Verfahren Folgendes umfasst:
Zugeben eines mehrzähnigen Liganden zur Herstellung einer wässrigen Lösung, die ein Metallpartikel, den mehrzähnigen Liganden und Ionen von mindestens zwei Übergangsmetallen enthält, wobei das Metallpartikel ein Übergangsmetall umfasst, das identisch mit mindestens einem der Ionen der mindestens zwei Übergangsmetalle ist; und
Überführen der wässrigen Lösung in eine alkalische wässrige Lösung bei Umgebungstemperatur.

15. Verfahren zur Herstellung eines Katalysators gemäß Anspruch 14, wobei
der Katalysator ein geschichtetes Doppelhydroxid und das Metallpartikel umfasst, und
ein Verhältnis R2/R1 größer oder gleich 0,87 und kleiner oder gleich 1,20 ist, wobei das Verhältnis R2/R1 ein Verhältnis von R2 zu R1 ist, wobei
R1 definiert ist als ein Verhältnis einer Masse des Metallpartikels zu einer Masse des geschichteten Doppelhydroxids, wobei die Masse des Metallpartikels eine Masse des der wässrigen Lösung zugesetzten Metallpartikels ist und die Masse des geschichteten Doppelhydroxids eine Masse des geschichteten Doppelhydroxids in einem Fall ist, in dem alle Ionen der mindestens zwei Übergangsmetalle in der wässrigen Lösung zur Bildung des geschichteten Doppelhydroxids beitragen, und
R2 definiert ist als ein Verhältnis einer Masse des Metallpartikels im Katalysator zu einer Masse des geschichteten Doppelhydroxids im Katalysator.

16. Verfahren zur Herstellung eines Katalysators gemäß Anspruch 14 oder 15, ferner umfassend das Erhöhen eines pH-Werts der alkalischen wässrigen Lösung.

17. Verfahren zur Herstellung eines Katalysators gemäß einem der Ansprüche 14 bis 16, wobei die Ionen der mindestens zwei Übergangsmetalle Ionen von mindestens zwei Übergangsmetallen umfassen, die aus der Gruppe bestehend aus V, Cr, Mn, Fe, Co, Ni, Cu, W und Ru ausgewählt sind.

18. Verfahren zur Herstellung eines Katalysators gemäß einem der Ansprüche 14 bis 17, wobei die Ionen der mindestens zwei Übergangsmetalle ein Ion mindestens eines Übergangsmetalls umfassen, das aus der Gruppe bestehend aus Ni und Fe ausgewählt ist.

19. Verfahren zur Herstellung eines Katalysators gemäß einem der Ansprüche 14 bis 18, wobei die Ionen der mindestens zwei Übergangsmetalle und der mehrzähnige Ligand Komplexe bilden, die eine Löslichkeit in Wasser bei 20 °C bis 25 °C von größer oder gleich 2 g/Liter aufweisen.

20. Verfahren zur Herstellung eines Katalysators gemäß einem der Ansprüche 14 bis 19, wobei der mehrzähnige Ligand mindestens eines aus der Gruppe bestehend aus Acetylaceton und einem Citronensäuresalz umfasst.

21. Verfahren zur Herstellung eines Katalysators gemäß einem der Ansprüche 14 bis 20, wobei das Verhältnis der Konzentration des mehrzähnigen Liganden in der wässrigen Lösung zur Gesamtkonzentration der Ionen der mindestens zwei Übergangsmetalle in der wässrigen Lösung kleiner oder gleich 0,4 ist.

## Revendications

1. Catalyseur comprenant :
un hydroxyde double lamellaire comprenant des ions d'au moins deux métaux de transition ; et
une particule métallique comprenant au moins un métal de transition, la particule métallique présentant une surface revêtue de l'hydroxyde double lamellaire ;
**caractérisé en ce que** la particule métallique comprend du Ni.

2. Catalyseur selon la revendication 1, dans lequel un rapport R2/R1 est supérieur ou égal à 0,87 et inférieur ou égal à 1,20, le rapport R2/R1 étant le rapport de R2 sur R1, où
R1 est défini comme le rapport entre la masse de la particule métallique et la masse de l'hydroxyde double lamellaire, la masse de la particule métallique étant la masse de la particule métallique utilisée dans la préparation du catalyseur, la masse de l'hydroxyde double lamellaire étant la masse de l'hydroxyde double lamellaire dans le cas où tous les ions de métaux de transition utilisés dans la préparation du catalyseur contribuent à la formation de l'hydroxyde double lamellaire, les métaux de transition étant identiques aux au moins deux métaux de transition, et
R2 est défini comme le rapport entre la masse de la particule métallique dans le catalyseur et la masse de l'hydroxyde double lamellaire dans le catalyseur.

3. Catalyseur selon la revendication 1 ou 2, comprenant en outre une couche de revêtement qui est prévue sur la surface de la particule métallique et qui comprend l'hydroxyde double lamellaire, dans lequel la couche de revêtement présente une épaisseur moyenne inférieure ou égale à 100 nm.

4. Catalyseur selon l'une quelconque des revendications 1 à 3, dans lequel l'hydroxyde double lamellaire présente une taille de cristallite inférieure ou égale à 10 nm.

5. Catalyseur selon l'une quelconque des revendications 1 à 4, dans lequel l'hydroxyde double lamellaire comprend un ligand multidenté.

6. Catalyseur selon la revendication 5, dans lequel le ligand multidenté comprend au moins un composé choisi dans le groupe constitué par l'acétylacétone et un sel d'acide citrique.

7. Catalyseur selon l'une quelconque des revendications 1 à 6, dans lequel les ions des au moins deux métaux de transition comprennent des ions d'au moins deux métaux de transition choisis dans le groupe constitué de V, Cr, Mn, Fe, Co, Ni, Cu, W et Ru.

8. Catalyseur selon l'une quelconque des revendications 1 à 7, dans lequel les ions des au moins deux métaux de transition comprennent un ion d'au moins un métal de transition choisi dans le groupe constitué de Ni et Fe.

9. Catalyseur selon l'une quelconque des revendications 1 à 8, dans lequel la particule métallique présente un diamètre moyen inférieur ou égal à 50 nm.

10. Catalyseur pour une cellule d'électrolyse de l'eau, comprenant le catalyseur selon l'une quelconque des revendications 1 à 9.

11. Cellule d'électrolyse de l'eau comprenant :
une électrode positive comprenant le catalyseur pour une cellule d'électrolyse de l'eau selon la revendication 10 ;
une électrode négative ; et
un électrolyte.

12. Cellule d'électrolyse de l'eau comprenant :
une électrode positive ;
une électrode négative comprenant le catalyseur pour une cellule d'électrolyse de l'eau selon la revendication 10 ; et
un électrolyte.

13. Dispositif d'électrolyse de l'eau comprenant :
la cellule d'électrolyse de l'eau selon la revendication 11 ou 12 ; et
un applicateur de tension qui applique une tension entre l'électrode positive et l'électrode négative, l'applicateur de tension étant connecté à l'électrode positive et à l'électrode négative.

14. Procédé de production d'un catalyseur selon la revendication 1, le procédé comprenant :
l'ajout d'un ligand multidenté pour préparer une solution aqueuse qui comprend une particule métallique, le ligand multidenté et des ions d'au moins deux métaux de transition, la particule métallique comprenant un métal de transition qui est identique à au moins l'un des ions des au moins deux métaux de transition ; et
la conversion de la solution aqueuse en une solution aqueuse alcaline à température ambiante.

15. Procédé de production d'un catalyseur selon la revendication 14, dans lequel
le catalyseur comprend un hydroxyde double lamellaire et la particule métallique, et
un rapport R2/R1 est supérieur ou égal à 0,87 et inférieur ou égal à 1,20, le rapport R2/R1 étant le rapport de R2 sur R1, où
R1 est défini comme le rapport entre la masse de la particule métallique et la masse de l'hydroxyde double lamellaire, la masse de la particule métallique étant la masse de la particule métallique ajoutée à la solution aqueuse, la masse de l'hydroxyde double lamellaire étant la masse de l'hydroxyde double lamellaire dans le cas où tous les ions des au moins deux métaux de transition dans la solution aqueuse contribuent à la formation de l'hydroxyde double lamellaire, et
R2 est défini comme le rapport entre la masse de la particule métallique dans le catalyseur et la masse de l'hydroxyde double lamellaire dans le catalyseur.

16. Procédé de production d'un catalyseur selon la revendication 14 ou 15, comprenant en outre l'augmentation du pH de la solution aqueuse alcaline.

17. Procédé de production d'un catalyseur selon l'une quelconque des revendications 14 à 16, dans lequel les ions des au moins deux métaux de transition comprennent des ions d'au moins deux métaux de transition choisis dans le groupe constitué de V, Cr, Mn, Fe, Co, Ni, Cu, W et Ru.

18. Procédé de production d'un catalyseur selon l'une quelconque des revendications 14 à 17, dans lequel les ions des au moins deux métaux de transition comprennent un ion d'au moins un métal de transition choisi dans le groupe constitué de Ni et Fe.

19. Procédé de production d'un catalyseur selon l'une quelconque des revendications 14 à 18, dans lequel les ions des au moins deux métaux de transition et le ligand multidenté forment des complexes présentant une solubilité dans l'eau à une température comprise entre 20°C et 25°C supérieure ou égale à 2 g/litre.

20. Procédé de production d'un catalyseur selon l'une quelconque des revendications 14 à 19, dans lequel le ligand multidenté comprend au moins un composé choisi dans le groupe constitué de l'acétylacétone et d'un sel d'acide citrique.

21. Procédé de production d'un catalyseur selon l'une quelconque des revendications 14 à 20, dans lequel le rapport entre la concentration du ligand multidenté dans la solution aqueuse et la concentration totale des ions des au moins deux métaux de transition dans la solution aqueuse est inférieur ou égal à 0,4.
